# EUROPÄISCHE PATENTSCHRIFT

(11) **EP 1 916 829 B1**
(45) Veröffentlichungstag und Bekanntmachung des Hinweises auf die Patenterteilung: **02.09.2009**
(21) Anmeldenummer: 06405454.7
(22) Anmeldetag: 25.10.2006
(51) Int. Cl.: H04M 1/725

(54) **Verfahren und Kommunikationsendgerät zum übermitteln von Sprachnachrichten**
Method and communication terminal for communicating voice messages
Procédé et terminal de communication pour communiquer par des messages vocaux

(43) Veröffentlichungstag der Anmeldung: 30.04.2008
(73) Patentinhaber: Roth, Hans-Jörg, 5073 Gipf-Oberfrick (CH)
(72) Erfinder: Roth, Hans-Jörg, 5073 Gipf-Oberfrick (CH)
(74) Vertreter: Vogel, Dany

(56) Entgegenhaltungen:
- EP-A- 1 278 361
- WO-A-20/04079929
- US-A- 5 881 104
- US-A- 6 075 844
- US-A1- 2005 207 543
- US-A1- 2005 286 689

## Beschreibung

### Technisches Gebiet

Die vorliegende Erfindung betrifft ein Verfahren und ein Kommunikationsendgerät zum Übermitteln von Sprachnachrichten. Die vorliegende Erfindung betrifft insbesondere ein Verfahren und ein Kommunikationsendgerät, z.B. ein mobiles Kommunikationsendgerät, zum Übermitteln von Sprachnachrichten in einem Telekommunikationsnetz, z.B. in einem Mobilfunknetz, wobei ein von einem Benutzer gesprochenes Tonsignal aufgenommen und digitalisiert wird.

### Stand der Technik

Mit der Verbreitung der Mobilfunktelefonie hat sich insbesondere in GSM-Netzen (Global System for Mobile Communication) auch die Übermittlung von Sprachnachrichten in Form von Textnachrichten mittels so genannter SMS-Meldungen (Short Messaging Services) als äusserst populäre und effiziente Kommunikationsmethode erwiesen. Mit einer SMS-Meldung können bis zu 160 Zeichen zwischen mobilen Kommunikationsendgeräten über das Mobilfunknetz ausgetauscht werden. Seit einigen Jahren können SMS-Meldungen auch über das Festnetz und insbesondere über das Internet versendet werden.

Obwohl sich vor allem jugendliche Benutzer eine erstaunliche Fingerfertigkeit angeeignet haben, um SMS-Meldungen mittels der auf den Mobilfunktelefonen verfügbaren kleinen Tasten einzutippen, finden viele Benutzer diese Eingabe als eher mühsam und ineffizient.

In der Patentanmeldung US 2002/0142787 wird ein Verfahren zur Übermittlung von Sprachnachrichten beschrieben, in welchem Sprachsignale des Benutzers durch eine Spracherkennungseinheit im Mobilfunktelefon mit abgespeicherten Texten verglichen werden. Der Text mit der grössten Übereinstimmung wird dem Benutzer zur Kontrolle angezeigt und kann als Textmeldung übermittelt werden. Die Einschränkung auf vordefinierte Texte eignet sich nicht für Anwendungen, in denen der Benutzer beliebige Sprachnachrichten übermitteln möchte.

In der Patentanmeldung DE 19959903 werden für die Beantwortung von SMS-Meldungen die Verwendung von Spracherkennung und die Umwandlung in Text vorgeschlagen. Die Erfahrungen mit Spracherkennungsmodulen haben allerdings gezeigt, dass für unterschiedliche Benutzer, Vokabulare, Sprachen, Dialekte und/oder Akzente aufwendige Anpassungen und "Training" erforderlich sind, so dass die Erkennung und Umwandlung beliebiger gesprochener Sprachnachrichten zur Zeit nicht für den Massenmarkt der Mobilfunktelefonie geeignet ist.

Die Patentanmeldung WO 2004/080095 beschreibt ein Verfahren, in welchem über den Zugriff auf ein Meldungsmenu eines Mobilfunktelefons eine SMS-Meldung mittels Sprach/Text-Konversion oder durch Eintippen erzeugt wird. Danach wird eine gesprochenen Meldung aufgezeichnet und mit der SMS-Meldung und optional auch mit Bildinformationen in einer MMS-Meldung (Multimedia Messaging Service) kombiniert. Die kombinierte MMS-Meldung wird dann an einen Empfänger übermittelt. Typischerweise ist die Sprach/Text-Konversion auf vordefinierte Textvorlagen beschränkt.

Die Patentanmeldung US 2005/0207543 beschreibt ein Verfahren und eine Vorrichtung für den Austausch von mehreren verschiedenen Meldungstypen, insbesondere auch Voice Mail und Instant Messaging. Gemäss US 2005/0207543 werden aufgenommene Spracheingaben in Sound-Dateien verwandelt und darauf basierend Informationen zur Erzeugung von Meldungen bestimmt, z.B. Empfänger, Gegenstand oder Meldungstyp.

Die Patentanmeldung US 2005/0286689 beschreibt ein Verfahren für die Übermittlung von Sprachnachrichten mittels eines Mobilfunktelefons. Gemäss US 2005/0286689 wird nach Tastendruck eine geprochene Nachricht in ein Mobilfunktelefon aufgenommen, dort gespeichert und über ein Mobilfunknetz an einen Empfänger übermittelt, wo sie akustisch wieder gegeben wird.

### Darstellung der Erfindung

Es ist eine Aufgabe der vorliegenden Erfindung ein Verfahren und ein Kommunikationsendgerät zum Übermitteln von Sprachnachrichten in einem Telekommunikationsnetz vorzuschlagen, welche nicht die angeführten Nachteile der bekannten Verfahren und Systeme aufweisen und insbesondere für einen Benutzer einfacher und effizienter zu bedienen sind.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zum Übermitteln einer Sprachnachricht in einem Telekommunikationsnetz, in einem ersten Kommunikationsendgerät von einem Benutzer ein Befehlssignal zum Erzeugen der Sprachnachricht entgegengenommen wird. Als Antwort auf das Befehlssignal wird ein vom Benutzer gesprochenes Tonsignal im ersten Kommunikationsendgerät aufgenommen und digitalisiert, das digitalisierte Tonsignal wird in einem Datenspeicher im ersten Kommunikationsendgerät gespeichert, und die Sprachnachricht wird im ersten Kommunikationsendgerät erzeugt, wobei die Sprachnachricht mindestens eine Nachrichtenkennung zum Kennzeichnen der Sprachnachricht als tonbasierte Sprachnachricht und das digitalisierte Tonsignal umfasst. Die erzeugte Sprachnachricht wird über das Telekommunikationsnetz an ein zweites Kommunikationsendgerät übermittelt. Im zweiten Kommunikationsendgerät wird die Sprachnachricht empfangen und die Nachrichtenkennung bestimmt. Auf Grund der bestimmten Nachrichtenkennung wird die Sprachnachricht als tonbasierte Sprachnachricht erkannt und das in der empfangenen Sprachnachricht enthaltene digitalisierte Tonsignal im zweiten Kommunikationsendgerät akustisch wiedergegeben. Das Telekommunikationsnetz ist ein Festnetz oder insbesondere ein Mobilfunknetz und die beteiligten sendenden und empfangenden Kommunikationsendgeräte sind mobile Kommunikationsendgeräte und/oder fest installierte Kommunikationsendgeräte. Die Aufnahme des Tonsignals und die darauf basierende Erzeugung der tonbasierten Sprachnachricht erfolgt, ohne weiteren Manipulationen am Kommunikationsendgerät durch den Benutzer, automatisch als untrennbare Aktion ("atomic action") als Reaktion auf ein einziges Befehlssignal vom Benutzer. Die automatische Aktivierung der Tonaufnahme und der Erzeugung der Sprachnachricht als Reaktion auf ein einziges Befehlssignal, das vom Benutzer beispielsweise durch Betätigen eines dafür vorgesehenen Bedienungselements, z.B. eine reservierte Funktionstaste, und/oder durch Anwählen einer entsprechenden Menuoption in einer grafischen Benutzerschnittstelle erzeugt wird, ermöglichen dem Benutzer eines Kommunikationsendgeräts tonbasierte Sprachnachrichten effizient und unkompliziert bereitzustellen und zu senden. Die Kennzeichnung und Übermittlung der Sprachnachricht als arteigene tonbasierte Sprachnachricht ermöglicht eine effiziente und artspezifische Behandlung der Sprachnachricht bei der Übermittlung im Telekommunikationsnetz und beim empfangenden Kommunikationsendgerät. Insbesondere kann die tonbasierte Sprachnachricht im empfangenden Kommunikationsendgerät auf Grund der artspezifischen Nachrichtenkennung automatisch, oder als Reaktion auf ein einziges Befehlssignal des empfangenden Benutzers, als Tonsignal akustisch wiedergegeben werden.

In einer Ausführungsvariante wird die empfangene Sprachnachricht vor der akustischen Wiedergabe im zweiten Kommunikationsendgerät dem Benutzer durch einen der Sprachnachricht zugeordneten Klingelton signalisiert. Beispielsweise wird im zweiten Kommunikationsendgerät ein Segment des in der empfangenen Sprachnachricht enthaltenen digitalisierten Tonsignals als Klingelton bereitgestellt, und die empfangene Sprachnachricht wird dem Benutzer vor der akustischen Wiedergabe durch diesen bereitgestellten Klingelton signalisiert. Das heisst, auf Grund der artspezifischen Nachrichtenkennung kann im Kommunikationsendgerät automatisch ein nachrichten- und inhaltsspezifischer Klingelton bereitgestellt werden. Wenn beispielsweise die ersten zwei oder drei Sekunden des gesprochenen Tonsignals beim Empfänger automatisch als Klingelton bereitgestellt und akustisch wiedergegeben werden, kann dem Benutzer auf Grund der Stimme und/oder des semantischen Inhalts des gesprochenen Texts bereits per Klingelton, d.h. ohne jegliche Manipulation des Benutzers am empfangenden Kommunikationsendgerät, angekündigt werden, wer die Sprachnachricht gesendet hat, z.B. "Hallo Sabine, hier ist Karl".

In einer weiteren Ausführungsvariante wird das gesprochene Tonsignal einer Datenkompression unterzogen, vorzugsweise eine sprachspezifische Datenkompression. Die Sprachnachricht umfasst zudem eine Kompressionskennung zum Kennzeichnen der betreffenden Datenkompression, d.h. zum Identifizieren des verwendeten Datenkompressions- und/oder Sprachcodierungsverfahrens, z.B. ein LPC-Verfahren (Linear Predictive Coding). Für die akustische Widergabe des Tonsignals wird das komprimierte digitalisierte Tonsignal mit einer der Kompressionskennung zugeordneten Datendekompression dekomprimiert, d.h. einem entsprechenden Daten- und/oder Sprachdecodierungsverfahren unterzogen. Die komprimierte und sprachspezifische Codierung des gesprochenen Tonsignals ermöglicht eine besonders kompakte und effiziente Übermittlung der tonbasierten Sprachnachricht, beispielsweise ohne den Overhead einer MMS-Meldung.

In einer zusätzlichen Ausführungsvariante werden Adressinformation, zur Identifizierung des zweiten Kommunikationsendgeräts, im ersten Kommunikationsendgerät mittels Spracherkennung basierend auf einem Segment des digitalisierten Tonsignals bestimmt. Das Segment mit den gesprochenen Adressangaben, z.B. eine gesprochene Telefonnummer oder ein Personenname, wird im Tonsignal beispielsweise durch eine vorgegebene Position, z.B. am Anfang oder am Ende, oder durch ein einleitendes Schlüsselwort, z.B. "Adressat", oder ein digitales Segmentmarkierungsfeld bestimmt. Die sprachbasierte Angabe der Adressinformationen während dem Sprechen der Sprachnachricht ermöglicht dem Benutzer eine besonders einfache Erzeugung der tonbasierten Sprachnachricht, ohne Manipulationen für die Bestimmung des Adressats in Menus und Listen und ohne Auswahlbefehle. In alternativen Ausführungsvarianten werden die gesprochenen Adressangaben separat vom gesprochenen Meldungsinhalt aufgezeichnet oder durch den Benutzer aus entsprechenden Listen ausgewählt oder eingetippt.

Erfindungsgemäss werden im Tonsignal eines oder mehrere Inhaltssegmente durch Segmentmarkierungen bestimmt. Die Segmentmarkierungen umfassen mindestens ein gesprochenes definiertes Schlüsselwort und/oder ein eingefügtes digitales Segmentmarkierungsfeld. Im ersten Kommunikationsendgerät und/oder im zweiten Kommunikationsendgerät werden die Segmentmarkierungen und die zugeordneten Inhaltssegmente im digitalisierten Tonsignal bestimmt, insbesondere werden gesprochene definierte Schlüsselwörter mittels Spracherkennung bestimmt. Wie bereits erwähnt kann ein Schlüsselwort oder ein digitales Segmentmarkierungsfeld für ein Segment mit einer gesprochenen Adressangabe oder einem gesprochenen Klingelton vorgesehen werden, es können auch weitere Schlüsselwörter respektive Segmentmarkierungsfelder für die Bestimmung von Segmenten mit anderen Dateninhalten und/oder als Instruktionen für die Bearbeitung der tonbasierten Sprachnachricht verwendet werden. Beispielsweise kann ein definiertes Schlüsselwort, z.B. "SEND", vorgesehen werden, welches einerseits das Tonsignal (vor einer definierten Maximaldauer) beendet und andererseits die automatische Übermittlung der tonbasierten Sprachnachricht auslöst.

In einer weiteren Ausführungsvariante wird die Übermittlung der Sprachnachricht im ersten Kommunikationsendgerät durch ein Befehlssignal des Benutzers zum Senden der Sprachnachricht eingeleitet. Das Befehlssignal zum Senden der Sprachnachricht wird vom Benutzer beispielsweise durch einen Befehlstastendruck, durch eine Menuselektion und/oder durch Sprechen eines Schlüsselworts gegeben, z.B. während dem Sprechen der Sprachnachricht. Abhängig von der Ausführungsvariante kann die Sprachnachricht durch den Benutzer ohne weitere Manipulationen am Kommunikationsendgerät einzig mit dem Befehlssignal zum Erzeugen der Sprachnachricht (z.B. Drücken einer Funktionstaste oder Wahl einer Menuoption) sowie dem Sprechen der Nachricht, der Adressangaben und des Sendebefehls erzeugt und übermittelt werden ("single-click"-Lösung).

Neben dem Verfahren und dem Kommunikationsendgerät zum Übermitteln einer tonbasierten Sprachnachricht über ein Telekommunikationsnetz bezieht sich die vorliegende Erfindung zudem auf ein Computerprogrammprodukt, das Computerprogrammcodemittel umfasst zur Steuerung eines oder mehrerer Prozessoren eines Kommunikationsendgeräts derart, dass das Kommunikationsendgerät das Verfahren zum Übermitteln der tonbasierten Sprachnachricht über das Telekommunikationsnetz ausführt, insbesondere ein Computerprogrammprodukt, das ein computeriesbares Medium mit den darin enthaltenen Computerprogrammcodemitteln umfasst.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein Kommunikationsendgerät darstellt, welches über ein Telekommunikationsnetz eine Sprachnachricht an ein weiteres Kommunikationsendgerät übermittelt.
Figur 2 zeigt ein Flussdiagramm, das ein Beispiel einer Sequenz von Schritten für die Übermittlung einer Sprachnachricht über ein Telekommunikationsnetz darstellt.
Figur 3 zeigt ein Flussdiagramm, das ein Beispiel einer Sequenz von Schritten für die Aufnahme eines Tonsignals für die Sprachnachricht darstellt.
Figur 4 zeigt ein Flussdiagramm, das ein Beispiel einer Sequenz von Schritten für eine segmentierte Aufnahme des Tonsignals darstellt.
Figur 5 zeigt ein Flussdiagramm, das ein Beispiel einer Sequenz von Schritten für die Wiedergabe der Sprachnachricht darstellt.

### Wege zur Ausführung der Erfindung

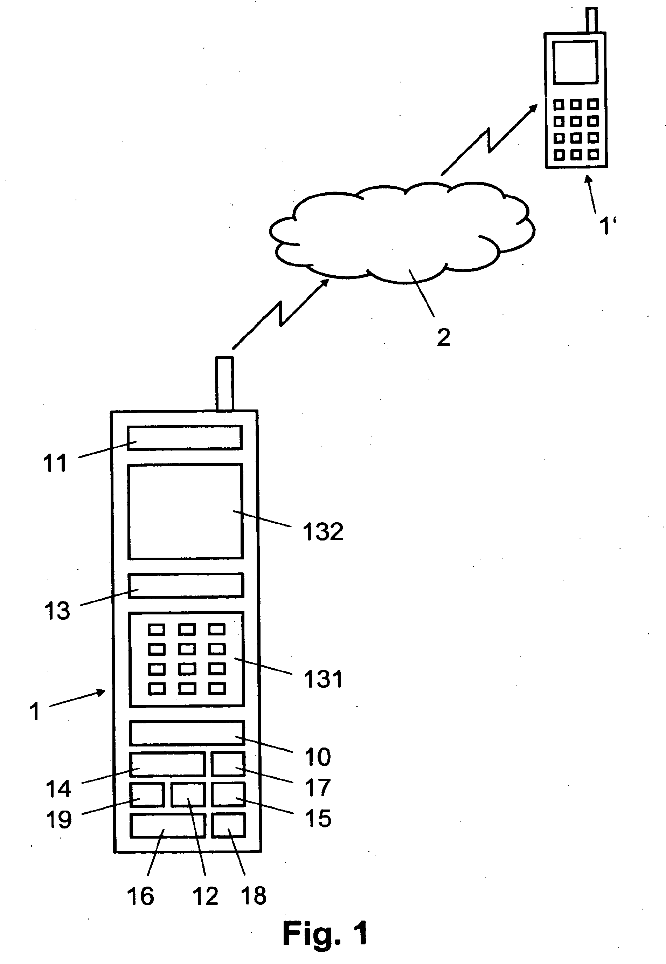

In der Figur 1 bezeichnen die Bezugszeichen 1 und 1' jeweils ein Kommunikationsendgerät, insbesondere ein mobiles Kommunikationsendgerät, beispielsweise ein Mobilfunktelefon, ein PDA (Personal Digital Assistant) oder ein tragbarer Personal Computer, oder ein fest installiertes Kommunikationsendgerät, beispielsweise ein Festnetztelefon oder ein Personal Computer, welche für die Datenkommunikation über ein Telekommunikationsnetz 2 eingerichtet sind, beispielsweise ein Festnetz, wie das öffentliche geschaltete Telefonnetz (PSTN) oder das Internet, oder ein Mobilfunknetz, wie ein GSM-Netz (Global System for Mobile Communication), ein UMTS-Netz (Universal Mobile Communication System) oder an anderes terrestrisches oder satellitenbasiertes Mobilfunknetz. Das in der Figur 1 mit dem Bezugszeichen 1' bezeichnete Kommunikationsendgerät weist eine Funktionalität auf, die derjenigen des detailliert dargestellten Kommunikationsendgeräts 1 entspricht.

Wie in der Figur 1 schematisch dargestellt ist, umfasst das Kommunikationsendgerät 1 ein Kommunikationsmodul 11 für die Datenkommunikation über das Telekommunikationsnetz 2, Bedienungselemente 131, beispielsweise Eingabetasten, eine Anzeige 132 sowie ein Schnittstellenmodul 13 für die Interaktion mit einem Benutzer über die Bedienungselemente 131 und die Anzeige 132, insbesondere zum Entgegennehmen von Befehlssignalen des Benutzers. Das Kommunikationsendgerät 1 umfasst zudem ein Tonaufzeichnungsmodul 12 zum Aufnehmen und Digitalisieren eines Tonsignals, insbesondere ein vom Benutzer gesprochenes Tonsignal, sowie einen Datenspeicher 15 zum Speichern von digitalisierten Tonsignalen.

Das Kommunikationsendgerät 1 umfasst überdies verschiedene funktionale Module, nämlich ein Steuermodul 10, ein Sprachnachrichtenerzeugungsmodul 14, ein Sprachnachrichtenempfangsmodul 16, ein Datenkompressionsmodul 17, ein Datendekompressionsmodul 18 und ein Analysemodul 19. Die funktionalen Module sind vorzugsweise als programmierte Softwaremodule ausgeführt. Der Computerprogrammcode der Softwaremodule ist Teil eines Computerprogrammprodukts und ist vorzugsweise auf einem computerlesbaren Datenträger gespeichert, der fest oder entfernbar mit dem Kommunikationsendgerät 1 verbunden ist.

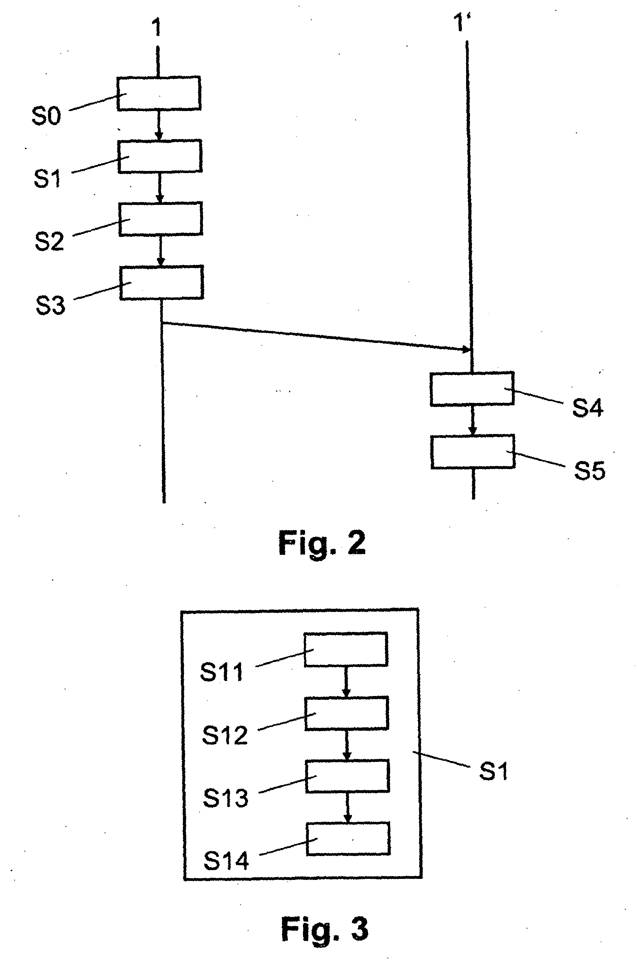

In den folgenden Abschnitten wird mit Bezug auf die Figuren 2, 3, 4 respektive 5 die Funktionalität der funktionalen Module im Zusammenhang mit möglichen Schrittsequenzen bei der Übermittlung einer tonbasierten Sprachnachricht über das Telekommunikationsnetz 2 beschrieben.

Wie in der Figur 2 schematisch dargestellt ist, nimmt das Steuermodul 10 im Schritt S0 vom Benutzer über das Schnittstellenmodul 13 ein Befehlssignal zum Erzeugen einer tonbasierten Sprachnachricht entgegen und aktiviert das Sprachnachrichtenerzeugungsmodul 14. Das Schnittstellenmodul 13 ist beispielsweise eingerichtet das Befehlssignal über die Betätigung eines dafür reservierten oder programmierten Bedienungselements 131 oder die Wahl einer dafür vorgesehenen Menuoption in einer grafischen Benutzerschnittstelle entgegenzunehmen.

Im Schritt S1 führt das Sprachnachrichtenerzeugungsmodul 14 mittels des Tonaufzeichnungsmoduls 12 die Aufnahme und Digitalisierung eines durch den Benutzer gesprochenen Tonsignals durch und speichert das digitalisierte Tonsignal im Datenspeicher 15.

Wie in der Figur 3 schematisch dargestellt ist, aktiviert das Sprachnachrichtenerzeugungsmodul 14 für die Aufnahme und Digitalisierung des Tonsignals im Schritt S11 das Tonaufzeichnungsmodul 12 und zeigt dem Benutzer beispielsweise auf der lokalen Anzeige 132 und/oder mittels eines akustischen Signals an, dass der Benutzer seine Meldung sprechen kann.

Im Schritt S12 wird die gesprochene Meldung vom Tonaufzeichnungsmodul 12 als Tonsignal aufgenommen und digitalisiert.

Optional wird das Tonsignal im Schritt S13 durch das Datenkompressionsmodul 17 komprimiert, beispielsweise mittels eines LPC Verfahrens. Der Schritt S13 wird beispielsweise anlässlich der Digitalisierung des Tonsignals ausgeführt. Entsprechend dem verwendeten Datenkompressionsverfahren wird eine Kompressionskennung zum Kennzeichnen eines Datenkompressionstyps als Meldungsparameter in die Sprachnachricht eingefügt.

Wenn das Tonsignal fertig aufgezeichnet worden ist, wird es im Schritt S14 durch das Sprachnachrichtenerzeugungsmodul 14 im Datenspeicher 15 gespeichert. Der Abschluss der Tonaufzeichnung wird durch ein Befehlssignal des Benutzers oder, wenn dieses ausbleibt, durch eine definierte maximale Zeitdauer bestimmt, z.B. eine maximale Meldungslänge von zwanzig oder dreissig Sekunden. Die Eingabe des Befehlssignals erfolgt beispielsweise durch Betätigung (Drücken) eines dafür vorgesehenen Bedienungselements 131 oder durch Sprechen eines abschliessenden Schlüsselworts, z.B. "SENDEN" oder "ENDE", durch den Benutzer. Zur Detektion des Schlüsselworts wird das Tonsignal vom Analysemodul 19 während der Aufnahme ständig überwacht und beispielsweise mit gespeicherten Sprachsignalen von definierten Schlüsselwörtern verglichen.

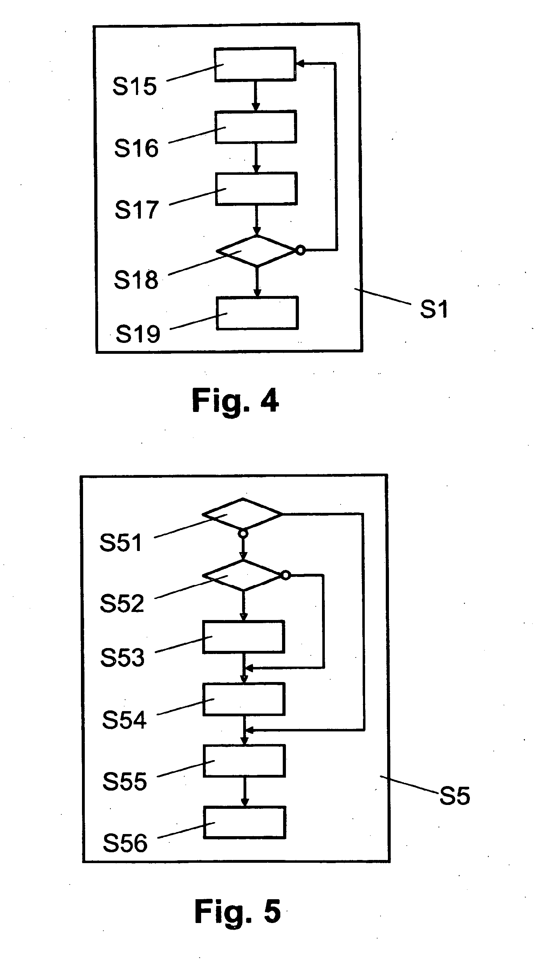

Die Figur 4 illustriert eine Ausführungsvariante, in welcher die Aufnahme und Digitalisierung der gesprochenen Meldung strukturiert für mehrere Segmente des Tonsignals erfolgt.

Im Schritt S15 fordert das Sprachnachrichtenerzeugungsmodul 14 den Benutzer auf, beispielsweise auf der Anzeige 132 und/oder mittels eines akustischen Signals, ein Meldungssegment zu sprechen, zum Beispiel eine als Klingelton zu verwendende Begrüssung, und aktiviert das Tonaufzeichnungsmodul 12 für die Aufnahme und Digitalisierung des entsprechenden Tonsignals.

Im Schritt S16 wird das gesprochene Meldungssegment vom Tonaufzeichnungsmodul 12 als Tonsignal aufgenommen und digitalisiert. Je nach Ausführungsvariante erfolgt auch eine Kompression des Tonsignals für das Meldungssegment wie oben im Zusammenhang mit Schritt S13 beschrieben wurde.

Wenn das Tonsignal für das Meldungssegment fertig aufgezeichnet worden ist, wird es im Schritt S17 durch das Sprachnachrichtenerzeugungsmodul 14 einer Segmentidentifizierung zugeordnet im Datenspeicher 15 gespeichert. Der Abschluss der Tonaufzeichnung eines Meldungssegments wird durch ein Befehlssignal des Benutzers oder, wenn dieses ausbleibt, durch eine definierte maximale segmentspezifische Zeitdauer bestimmt, z.B. zwei oder drei Sekunden für ein Klingeltonsegment.

Im Schritt S18 überprüft das Sprachnachrichtenerzeugungsmodul 14, ob weitere Meldungssegmente aufzunehmen sind und fährt gegebenenfalls im Schritt S15 mit der Aufnahme des nächsten Meldungssegments fort. Die strukturierte Aufnahme kann neben der Aufnahme von Meldungssegmenten wie Klingelton und eigentlichem Meldungsinhalt beispielsweise auch für die Aufnahme von Meldungsparametern und/oder weiteren Informationen verwendet werden, die nicht als Teil der Sprachnachricht übermittelt werden, beispielsweise Adressangaben.

Wenn die strukturierte Aufnahme abgeschlossen ist, stellt das Sprachnachrichtenerzeugungsmodul 14 im Schritt S19 aus den Tonsignalen der verschiedenen Meldungssegmente ein zusammengesetztes digitalisiertes Tonsignal bereit. Dabei werden die einzelnen Inhaltssegmente durch segmentspezifische digitale Segmentmarkierungsfelder voneinander getrennt und identifiziert, wie im Beispiel der Tabelle 1 dargestellt ist. Die Zusammensetzung des Tonsignals kann segmentweise auch jeweils bereits im Schritt S17 vorgenommen werden.

**Tabelle 1**

| Digitalisiertes Tonsignal | | | |
|---|---|---|---|
| Klingeltonsegment | | Meldungsinhaltsegment | |
| Segment- markierungsfeld für Klingelton | Digitalisierter Tonsignalteil für Klingelton | Segment- markierungsfeld für Meldungsinhalt | Digitalisierter Tonsignalteil für Meldungsinhalt |

Wie in der Figur 2 dargestellt ist, erzeugt das Sprachnachrichtenerzeugungsmodul 14 im Schritt S2, basierend auf dem gespeicherten digitalisierten Tonsignal eine tonbasierte Sprachnachricht, welche eine Nachrichtenkennung zum Kennzeichnen der Sprachnachricht als tonbasierte Sprachnachricht sowie das digitalisierte Tonsignal umfasst, wie im Beispiel der Tabelle 2 dargestellt ist. Die Nachrichtenkennung umfasst beispielsweise eine Protokollversionennummer und eine Protokollidentifizierung zur Unterscheidung der Sprachnachricht von anderen Meldungsformaten und Meldungstypen, die in Telekommunikationsnetzen 2 verwendet werden, z.B. von SMS-, EMS- (Enhanced Messaging Service) und/oder MMS-Meldungen, die in Mobilfunknetzen 2 verwendet werden. Die tonbasierte Sprachnachricht umfasst in einer Variante weitere Meldungsparameter, beispielsweise eine Instruktion zur Aktivierung eines meldungsspezifischen Klingeltons, einen Segmentbereich im Tonsignal, der für einen Klingelton zu verwenden ist, eine Instruktion zur automatischen Wiedergabe beim Empfänger und/oder eine Meldungspriorität.

**Tabelle 2**

| Tonbasierte Sprachnachricht | | | |
|---|---|---|---|
| Nachrichtenkennung | | Meldungsparameter | Tonsignal |
| Protokollidentifizierung | Protokollversionennummer | | |

Im Schritt S3 wird die erzeugte tonbasierte Sprachnachricht vom Kommunikationsendgerät 1 über das Telekommunikationsnetz 2 an das Kommunikationsendgerät 1' übertragen. Die Übermittlung der tonbasierten Sprachnachricht erfolgt im Telekommunikationsnetz 2, ähnlich der Übermittlung einer SMS-Meldung in einem Mobilfunknetz, in einem so genannten Store-and-Forward Modus und wird auf das empfangende Kommunikationsendgerät 1' übertragen, sobald dieses für den Empfang aktiviert ist.

Für die Übermittlung der tonbasierten Sprachnachricht bestimmt das Sprachnachrichtenerzeugungsmodul 14 Adressinformationen, die das Kommunikationsendgerät 1' bestimmen, an das die Sprachnachricht übermittelt werden soll. Die Adressinformationen umfassen vorzugsweise eine Telefonnummer, insbesondere eine MSISDN Nummer (Mobile Subscriber ISDN). Das Sprachnachrichtenerzeugungsmodul 14 nimmt vom Benutzer Adressangaben über das Schnittstellenmodul 13 entgegen, beispielsweise als Eingabe einer Telefonnummer oder eines Namens, oder als Wahl eines Eintrags in einer Liste mit Telefonnummern und/oder Namen. Die Adressangaben können vom Benutzer auch bereits zu einem früheren Zeitpunkt entgegengenommen werden, beispielsweise vor dem Schritt S0 oder zwischen den Schritten S0 und S1. In einer alternativen oder ergänzenden Ausführungsvariante gibt der Benutzer die Adressangaben, beispielsweise als Name oder Telefonnummer, in gesprochener Form als Teil des Tonsignals an. Die Adressangaben werden beispielsweise in ein speziell positioniertes oder durch ein Schlüsselwort gekennzeichnetes Segment des Tonsignals gesprochen, welches vorzugsweise vor dem Einfügen in die Sprachnachricht aus dem Tonsignal entfernt wird. In der Variante mit der strukturierten Aufnahme können die Adressangaben vom Benutzer als separates Meldungssegment gesprochen werden. Aus den gesprochenen Adressangaben werden die Adressinformationen mittels eines Spracherkennungsmoduls bestimmt, das beispielsweise im Analysemodul 19 oder im Sprachnachrichtenerzeugungsmodul 14 angeordnet ist. Das Spracherkennungsmodul ist eingerichtet, die gesprochenen Adressangaben einem der Namen und/oder Telefonnummern zuzuordnen, die in einer lokalen Adressatentabelle des Kommunikationsendgeräts 1 gespeichert sind.

Im Schritt S4 wird die tonbasierte Sprachnachricht im Kommunikationsendgerät 1' empfangen. Das lokale Steuermodul 10 bestimmt die Nachrichtenkennung der empfangenen Sprachnachricht. Wenn die bestimmte Nachrichtenkennung die Sprachnachricht als tonbasierte Sprachnachricht kennzeichnet, aktiviert das Steuermodul 10 das lokale Sprachnachrichtenempfangsmodul 16.

Im Schritt S5 gibt das Sprachnachrichtenempfangsmodul 16 das in der empfangenen tonbasierten Sprachnachricht enthaltene Tonsignal über einen elektroakustischen Wandler (Lautsprecher, Kopfhörer) dem Benutzer wieder.

Wie in der Figur 5 dargestellt ist, überprüft das lokale Sprachnachrichtenempfangsmodul 16 im Schritt S51, ob die empfangene Sprachnachricht eine Instruktion zur automatischen Wiedergabe umfasst. Wenn die Sprachnachricht automatisch wiedergegeben werden soll, fährt das Sprachnachrichtenempfangsmodul 16 im Schritt S55 fort.

Andernfalls überprüft das Sprachnachrichtenempfangsmodul 16 im Schritt S52, ob die empfangene Sprachnachricht eine Instruktion zur Aktivierung eines meldungsspezifischen Klingeltons umfasst. Wenn kein meldungsspezifischer Klingelton aktiviert werden soll, fährt das Sprachnachrichtenempfangsmodul 16 im Schritt S54 fort.

Im Schritt S53 stellt das Sprachnachrichtenempfangsmodul 16 ein dafür vorgesehenes Segment des in der empfangenen Sprachnachricht enthaltenen Tonsignals als Klingelton bereit. Je nach Ausführungsvariante und/oder Instruktion in der Sprachnachricht wird das Klingeltonsegment auf Grund seiner Position oder durch das Analysemodul 19 auf Grund eines entsprechenden Segmentmarkierungsfelds oder auf Grund eines gesprochenen Schlüsselworts bestimmt. Das als Klingelton zu verwendende Segment des Tonsignals, wird beispielsweise durch eine vorgegebene Anfangsposition, z.B. ab t=0, und eine definierte Endposition, z.B. bis t=3s, oder Dauer, z.B. drei Sekunden, oder durch ein Schlüsselwort oder ein digitales Segmentmarkierungsfeld vor dem Anfang, z.B. "Klingelton", und ein Schlüsselwort oder ein digitales Segmentmarkierungsfeld am Ende respektive eine Dauer bestimmt. Falls das Tonsignal komprimiert wurde, wird zumindest das für den Klingelton zu verwendende Segment durch das Datendekompressionsmodul 18 dekomprimiert.

Im Schritt S54, signalisiert das Sprachnachrichtenempfangsmodul 16 dem Benutzer den Eingang der empfangenen Sprachnachricht an, vorzugsweise durch einen Klingelton (oder durch einen Vibrationsalarm) und durch einen entsprechenden Hinweis mit Angabe des Absenders auf der lokalen Anzeige 132. Als Klingelton wird gegebenenfalls der im Schritt S53 bereit gestellte inhaltsspezifische Klingelton oder sonst ein generischer für tonbasierte Sprachnachrichten vorgesehener Klingelton verwendet. Der Klingelton wird beispielsweise abhängig von der Meldungspriorität einmal oder mehrmals und/oder in unterschiedlicher Lautstärke akustisch wiedergegeben.

Falls eine Datenkompression eingesetzt wurde, wird das Tonsignal im Schritt S55 durch das Datendekompressionsmodul 18 dekomprimiert und anschliessend, im Schritt S56 durch das Sprachnachrichtenempfangsmodul 16 über einen elektroakustischen Wandler wiedergegeben. Je nach Ausführungsvariante und/oder Instruktion in der Sprachnachricht wird das gesamte Tonsignal dekomprimiert und wiedergegeben oder bloss der verbleibende digitalisierte Tonsignalteil für den Meldungsinhalt. Der Tonsignalteil für den Meldungsinhalt wird gegebenenfalls auf Grund seiner Position oder durch das Analysemodul 19 auf Grund eines entsprechenden Segmentmarkierungsfelds oder gesprochenen Schlüsselworts bestimmt. Wenn keine automatische Wiedergabe vorgesehen ist, erfolgt die Datendekompression und die akustische Wiedergabe erst nach Empfang eines entsprechenden Befehlssignals vom Benutzer.

Der Fachmann wird verstehen, dass das beschriebene Verfahren und das entsprechende Computerprogrammprodukt für die Bereitstellung und Übermittlung von tonbasierten Sprachnachrichten mittels und zwischen mobilen und/oder fest installierten Kommunikationsendgeräten über Festnetze und/oder Mobilfunknetze verwendbar sind.

## Patentansprüche

1. Verfahren zum Übermitteln einer Sprachnachricht in einem Telekommunikationsnetz (2), umfassend:
Entegegennehmen (S0) eines Befehlssignals zum Erzeugen der Sprachnachricht in einem ersten Kommunikationsendgerät (1) von einem Benutzer;
als Antwort auf das Befehlssignal:
Aufnehmen und Digitalisieren (S12, S16) eines vom Benutzer gesprochenen Tonsignals im ersten Kommunikationsendgerät (1), wobei im digitalisierten Tonsignal eines oder mehrere Inhaltssegmente durch Segmentmarkierung bestimmt werden, und wobei die Segmentmarkierungen mindestens eines aus gesprochenes definiertes Schlüsselwort und eingefügtes digitales Segmentmarkierungsfeld umfassen,
Speichern (S14, S17) des digitalisierten Tonsignals in einem Datenspeicher (15) im ersten Kommunikationsendgerät (1), und
Erzeugen (S2) der Sprachnachricht im ersten Kommunikationsendgerät (1), wobei die Sprachnachricht mindestens das digitalisierte Tonsignal und eine Nachrichtenkennung zum Kennzeichnen der Sprachnachricht als tonbasierte Sprachnachricht umfasst;
Übermittlung (S3) der erzeugten Sprachnachricht über das Telekommunikationsnetz (2) an ein zweites Kommunikationsendgerät (1');
Empfangen (S4) der Sprachnachricht und Bestimmen der Nachrichtenkennung im zweiten Kommunikationsendgerät (1');
Bestimmen im zweiten Kommunikationsendgerät (1') von Segmentmarkierungen und zugeordneten Inhaltssegmenten im digitalisierten Tonsignal; und
akustische Wiedergabe (S5) im zweiten Kommunikationsendgerät (1') des in der empfangenen Sprachnachricht enthaltenen digitalisierten Tonsignals auf Grund der bestimmten Nachrichtenkennung.

2. Verfahren nach Anspruch 1, **dadurch gekennzeichnet, dass** die empfangene Sprachnachricht vor der akustischen Wiedergabe (S5) im zweiten Kommunikationsendgerät (1') dem Benutzer durch einen der Sprachnachricht zugeordneten Klingelton signalisiert (S54) wird.

3. Verfahren nach einem der Ansprüche 1 oder 2, **dadurch gekennzeichnet, dass** im zweiten Kommunikationsendgerät (1') ein Segment des in der empfangenen Sprachnachricht enthaltenen digitalisierten Tonsignals als Klingelton bereitgestellt (S53) wird, und dass die empfangene Sprachnachricht vor der akustischen Wiedergabe dem Benutzer durch den bereitgestellten Klingelton signalisiert (S54) wird.

4. Verfahren nach einem der Ansprüche 1 bis 3, **dadurch gekennzeichnet, dass** das Digitalisieren des gesprochenen Tonsignals eine Datenkompression umfasst, dass die Sprachnachricht zudem eine Kompressionskennung zum Kennzeichnen der Datenkompression umfasst, und dass die akustische Wiedergabe (S5) eine der Kompressionskennung zugeordnete Datendekompression umfasst.

5. Verfahren nach einem der Ansprüche 1 bis 4, **dadurch gekennzeichnet, dass** Adressinformation, zur Identifizierung des zweiten Kommunikationsendgeräts (1'), im ersten Kommunikationsendgerät (1) mittels Spracherkennung basierend auf einem Segment des digitalisierten Tonsignals bestimmt werden.

6. Verfahren nach einem der Ansprüche 1 bis 5, **dadurch gekennzeichnet, dass** im ersten Kommunikationsendgerät (1) Segmentmarkierungen und zugeordnete Inhaltssegmente im digitalisierten Tonsignal bestimmt werden.

7. Verfahren nach einem der Ansprüche 1 bis 6, **dadurch gekennzeichnet, dass** die Übermittlung der Sprachnachricht (S3) im ersten Kommunikationsendgerät (1) durch ein Befehlssignal des Benutzers zum Senden der Sprachnachricht eingeleitet wird, wobei das Befehlssignal zum Senden der Sprachnachricht vom Benutzer durch eines aus Befehlstastendruck, Menuselektion, und Sprechen eines Schlüsselworts gegeben wird.

8. Kommunikationsendgerät (1), umfassend ein Kommunikationsmodul (11) zum Übermitteln und Empfangen von Daten in einem Telekommunikationsnetz (2), ein Tonaufzeichnungsmodul (12) zum Aufnehmen und Digitalisieren eines von einem Benutzer gesprochenen Tonsignals, und ein Schnittstellenmodul (13) zum Entgegennehmen von einem Benutzer eines Befehlssignals zum Erzeugen einer tonbasierten Sprachnachricht und zum Aktivieren eines Sprachnachrichtenerzeugungsmoduls (14) als Antwort auf das Befehlssignal, **gekennzeichnet durch**
das Sprachnachrichtenerzeugungsmodul (14), welches eingerichtet ist zum Aktivieren des Tonaufzeichnungsmoduls (12), zum Speichern des digitalisierten Tonsignals in einem Datenspeicher (15) des Kommunikationsendgeräts (1), zum Erzeugen der tonbasierten Sprachnachricht, wobei die tonbasierte Sprachnachricht mindestens das digitalisierte Tonsignal und eine Nachrichtenkennung zur Kennzeichnung als tonbasierte Sprachnachricht umfasst, und zum Einleiten der Übermittlung der tonbasierten Sprachnachricht über das Telekommunikationsnetz (2) an ein empfangendes Kommunikationsendgerät (1');
ein Steuermodul (10) zum Bestimmen der Nachrichtenkennung einer im Kommunikationsendgerät (1) empfangenen Sprachnachricht und zum Aktivieren eines Sprachnachrichtenempfangsmoduls (16);
ein Analysemodul (19) zum Bestimmen von Segmentmarkierungen und zugeordneten Inhaltssegmenten im digitalisierten Tonsignal, wobei die Segmentmarkierungen mindestens eines aus gesprochenes definiertes Schlüsselwort und eingefügtes digitales Segmentmarkierungsfeld umfassen; und
das Sprachnachrichtenempfangsmodul (16) zum akustischen Wiedergeben des digitalisierten Tonsignals, das in der auf Grund der Nachrichtenkennung bestimmten empfangenen tonbasierten Sprachnachricht enthalten ist.

9. Kommunikationsendgerät (1) nach Anspruch 8, **dadurch gekennzeichnet, dass** das Sprachnachrichtenempfangsmodul (16) eingerichtet ist, die empfangene Sprachnachricht vor der akustischen Wiedergabe dem Benutzer durch einen der Sprachnachricht zugeordneten Klingelton zu signalisieren.

10. Kommunikationsendgerät (1) nach einem der Ansprüche 8 oder 9, **dadurch gekennzeichnet, dass** das Sprachnachrichtenempfangsmodul (16) eingerichtet ist ein Segment des in der empfangenen Sprachnachricht enthaltenen digitalisierten Tonsignals als Klingelton bereitzustellen, und die empfangene Sprachnachricht vor der akustischen Wiedergabe dem Benutzer durch den bereitgestellten Klingelton zu signalisieren.

11. Kommunikationsendgerät (1) nach einem der Ansprüche 8 bis 10, **dadurch gekennzeichnet, dass** das Kommunikationsendgerät (1) zudem ein Datenkompressionsmodul (17) umfasst zum Komprimieren des gesprochenen Tonsignals, dass das Sprachnachrichtenerzeugungsmodul (14) zudem eingerichtet ist, eine Kompressionskennung zum Kennzeichnen eines Datenkompressionstyps in die tonbasierte Sprachnachricht einzufügen, und dass das Kommunikationsendgerät (1) zudem ein Datendekompressionsmodul (18) umfasst zum Dekomprimieren eines komprimierten gesprochenen Tonsignals vor der akustischen Wiedergabe entsprechend der Kompressionskennung.

12. Kommunikationsendgerät (1) nach einem der Ansprüche 8 bis 11, **dadurch gekennzeichnet, dass** das Sprachnachrichtenerzeugungsmodul (14) eingerichtet ist, Adressinformation zur Identifizierung des empfangenden Kommunikationsendgeräts (1') mittels Spracherkennung basierend auf einem Segment des digitalisierten Tonsignals zu bestimmen.

13. Kommunikationsendgerät (1) nach einem der Ansprüche 7 bis 12, **dadurch gekennzeichnet, dass** das Sprachnachrichtenerzeugungsmodul (14) eingerichtet ist, vom Benutzer ein Befehlssignal zum Senden der Sprachnachricht über eines aus Befehlstastendruck, Menuselektion und gesprochenes Schlüsselwort entgegenzunehmen, und die Übermittlung der Sprachnachricht basierend auf diesem Befehlssignal einzuleiten.

14. Computerprogrammprodukt, umfassend Computerprogrammcodemittel zur Steuerung eines oder mehrerer Prozessoren eines Kommunikationsendgeräts (1, 1'), derart, dass das Kommunikationsendgerät (1, 1') ein Verfahren nach einem der Ansprüche 1 bis 7 ausführt.

## Claims

1. Method for transmitting a voice message in a telecommunication network (2), comprising:
acceptance (S0) of a command signal for producing the voice message in a first communication terminal (1) from a user;
in response to the command signal:
recording and digitizing (S12, S16) of an audio signal spoken by the user in the first communication terminal (1), wherein one or more content segments are determined in the digitized audio signal by segment marking, and wherein the segment markers comprise at least one of a spoken defined keyword and an inserted digital segment marking field,
storage (S14, S17) of the digitized audio signal in a data store (15) in the first communication terminal (1), and
production (S2) of the voice message in the first communication terminal (1), wherein the voice message comprises at least the digitized audio signal and a message identifier for identifying the voice message as an audio-based voice message;
transmission (S3) of the produced voice message via the telecommunication network (2) to a second communication terminal (1');
reception (S4) of the voice message and determination of the message identifier in the second communication terminal (1');
determination of segment markers and associated content segments in the digitized audio signal in the second communication terminal (1'); and
audio reproduction (S5) of the digitized audio signal contained in the received voice message in the second communication terminal (1') on the basis of the determined message identifier.

2. Method according to Claim 1, **characterized in that** the received voice message is signalled (S54) to the user by a ringtone associated with the voice message prior to the audio reproduction (S5) in the second communication terminal (1').

3. Method according to one of Claims 1 and 2, **characterized in that** a segment of the digitized audio signal contained in the received voice message is provided (S53) in the second communication terminal (1') as a ringtone, and **in that** the received voice message is signalled (S54) to the user by the provided ringtone prior to the audio reproduction.

4. Method according to one of Claims 1 to 3, **characterized in that** the digitization of the spoken audio signal comprises data compression, **in that** the voice message also comprises a compression identifier for identifying the data compression, and **in that** the audio reproduction (S5) comprises data decompression associated with the compression identifier.

5. Method according to one of Claims 1 to 4, **characterized in that** address information, for identifying the second communication terminal (1'), is determined in the first communication terminal (1) by means of voice recognition on the basis of a segment of the digitized audio signal.

6. Method according to one of Claims 1 to 5, **characterized in that** segment markers and associated content segments in the digitized audio signal are determined in the first communication terminal (1).

7. Method according to one of Claims 1 to 6, **characterized in that** the transmission of the voice message (S3) is initiated in the first communication terminal (1) by a command signal from the user for sending the voice message, wherein the command signal for sending the voice message is given by the user using one of the options from pressing a command key, selecting from a menu and speaking a keyword.

8. Communication terminal (1), comprising a communication module (11) for transmitting and receiving data in a telecommunication network (2), an audio recording module (12) for recording and digitizing an audio signal spoken by a user, and an interface module (13) for accepting from a user a command signal for producing an audio-based voice message and for activating a voice message production module (14) in response to the command signal, **characterized by**
the voice message production module (14), which is set up to activate the audio recording module (12), to store the digitized audio signal in a data store (15) in the communication terminal (1), to produce the audio-based voice message, the audio-based voice message comprising at least the digitized audio signal and a message identifier tor identifying the message as an audio-based voice message, and to initiate the transmission of the audio-based voice message via the telecommunication network (2) to a receiving communication terminal (1');
a control module (10) for determining the message identifier of a voice message received in the communication terminal (1) and for activating a voice message reception module (16);
an analysis module (19) for determining segment markers and associated content segments in the digitized audio signal, the segment markers comprising at least one of a spoken defined keyword and an inserted digital segment marking field; and
the voice message reception module (16) for the audio reproduction of the digitized audio signal which is contained in the received audio-based voice message determined on the basis of the message identifier.

9. Communication terminal (1) according to Claim 8, **characterized in that** the voice message reception module (16) is set up to signal the received voice message to the user by means of a ringtone associated with the voice message prior to the audio reproduction.

10. Communication terminal (1) according to one of Claims 8 and 9, **characterized in that** the voice message reception module (16) is set up to provide a segment of the digitized audio signal contained in the received voice message as a ringtone and to signal the received voice message to the user by means of the provided ringtone prior to the audio reproduction.

11. Communication terminal (1) according to one of Claims 8 to 10, **characterized in that** the communication terminal (1) also comprises a data compression module (17) for compressing the spoken audio signal, **in that** the voice message production module (14) is also set up to insert a compression identifier for identifying a data compression type into the audio-based voice message, and **in that** the communication terminal (1) also comprises a data decompression module (18) for decompressing a compressed spoken audio signal prior to the audio reproduction in line with the compression identifier.

12. Communication terminal (1) according to one of Claims 8 to 11, **characterized in that** the voice message production module (14) is set up to determine address information for identifying the receiving communication terminal (1') by means of voice recognition on the basis of a segment of the digitized audio signal.

13. Communication terminal (1) according to one of Claims 7 to 12, **characterized in that** the voice message production module (14) is set up to accept from the user a command signal for sending the voice message by means of one of the options from a command key being pressed, menu selection and a spoken keyword, and to initiate the transmission of the voice message on the basis of this command signal.

14. Computer program product, comprising computer program code means for controlling one or more processors in a communication terminal (1, 1') such that the communication terminal (1, 1') carries out a method according to one of Claims 1 to 7.

## Revendications

1. Procédé de transmission d'un message vocal dans un réseau de télécommunication (2), comportant les étapes qui consistent à :
faire recevoir (S0) par un utilisateur un signal de commande en vue de la formation du message vocal dans un premier terminal de communication (1),
et en réponse au signal de commande :
recevoir et numériser (S12, S16) un signal audio prononcé par l'utilisateur dans le premier terminal de communication (1), un ou plusieurs segments du contenu du signal numérisé audio étant déterminés par un repérage de segments, les repères de segments comprenant au moins un de certain mot-clé prononcé et champ numérique inséré de repérage de segments,
conserver (S14, S17) le signal audio numérisé dans une mémoire de données (15) du premier terminal de communication (1) et
former (S2) le message vocal dans le premier terminal de communication (1), le message vocal comprenant au moins le signal audio numérisé et une caractérisation de message qui caractérise le message vocal comme message vocal à base audio,
transmettre (S3) le message vocal formé à un deuxième terminal de communication (1') par l'intermédiaire du réseau de télécommunication (2),
recevoir (S4) le message vocal dans le deuxième terminal de communication (1') et y déterminer la caractérisation du message,
faire déterminer dans le deuxième terminal de communication (1') des repères de segments et les segments associés du contenu du signal audio numérisé et
reproduire acoustiquement (S5) dans le deuxième terminal de communication (1') le signal audio numérisé contenu dans le message vocal reçu, sur base de la caractérisation définie du message.

2. Procédé selon la revendication 1, **caractérisé en ce que** le message vocal reçu est signalé (S54) à l'utilisateur par une tonalité de sonnerie associée au message vocal avant le reproduction acoustique (S5) dans le deuxième terminal de communication (1').

3. Procédé selon l'une des revendications 1 ou 2, **caractérisé en ce que** dans le deuxième terminal de communication (1'), un segment du signal audio numérisé contenu dans le message vocal reçu est préparé sous la forme d'une tonalité de sonnerie (S53) et **en ce qu'**avant la reproduction acoustique, le message vocal reçu est signalé (S54) à l'utilisateur par la tonalité de sonnerie ainsi préparée.

4. Procédé selon l'une des revendications 1 à 3, **caractérisé en ce que** la numérisation du signal audio parlé comprend une compression de données, **en ce que** le message vocal comprend en outre une caractérisation de compression qui caractérise la compression de données et **en ce que** la reproduction acoustique (S5) comprend une compression de données associée à la caractérisation de la compression.

5. Procédé selon l'une des revendications 1 à 4, **caractérisé en ce que** l'information d'adresse qui permet d'identifier le deuxième terminal de communication (1') est déterminée dans le premier terminal de communication (1) par reconnaissance vocale basée sur un segment du signal audio numérisé.

6. Procédé selon l'une des revendications 1 à 5, **caractérisé en ce que** dans le premier terminal de communication (1), des repères de segments et le contenu des segments associés sont déterminés dans le signal audio numérisé.

7. Procédé selon l'une des revendications 1 à 6, **caractérisé en ce que** la transmission du message vocal (S3) est lancée dans le premier terminal de communication (1) par un signal de commande introduit par l'utilisateur pour l'émission du message vocal, le signal de commande étant délivré par l'utilisateur pour l'émission du message vocal par enfoncement d'une touche de commande, sélection dans un menu et prononciation d'un mot-clé.

8. Terminal de communication (1) comprenant un module de communication (11) destiné à transmettre et recevoir des données dans un réseau de télécommunication (2), un module (12) de caractérisation audio qui reçoit et numérise un signal audio prononcé par un utilisateur et un module d'interface (13) qui reçoit d'un utilisateur un signal de commande en vue de former un message vocal à base audio et d'activer un module (14) de formation de message vocal en réponse au signal de commande,
**caractérisé par**
le module (14) de formation de messages vocaux, qui est conçu pour activer le module (12) de caractérisation audio, pour conserver le signal audio numérisé dans une mémoire de données (15) du terminal de communication (1), pour former le message vocal à base audio, le message vocal à base audio comprenant au moins le signal audio numérisé et une caractérisation de message qui le caractérise comme un message vocal à base audio et pour lancer la transmission du message vocal à base audio à un terminal de communication (1') récepteur par l'intermédiaire du réseau de télécommunication (2),
un module de commande (10) qui détermine la caractérisation de message d'un message vocal reçu dans le terminal de communication (1) et qui active un module (16) de réception de messages vocaux,
un module d'analyse (19) qui détermine les repères de segments et le contenu des segments associés dans le signal audio numérisé, les repères de segments comprenant au moins un de certain mot-clé prononcé et champ numérique inséré de repères de segments et
le module (16) de réception de messages vocaux qui reproduit le signal audio numérisé contenu dans le message vocal à base audio reçu et défini à l'aide de la caractérisation du message.

9. Terminal de communication (1) selon la revendication 8, **caractérisé en ce qu'**avant la reproduction acoustique à destination de l'utilisateur, le module (16) de réception de messages vocaux est conçu pour signaler la réception du message vocal par une tonalité de sonnerie associée au message vocal.

10. Terminal de communication (1) selon l'une des revendications 8 ou 9, **caractérisé en ce que** le module (16) de réception de messages vocaux est conçu pour préparer sous la forme d'une tonalité de sonnerie un segment du signal audio numérisé contenu dans le message vocal reçu et pour signaler avant la reproduction acoustique la réception du message vocal à l'utilisateur par la tonalité de sonnerie préparée.

11. Terminal de communication (1) selon l'une des revendications 8 à 10, **caractérisé en ce que** le terminal de communication (1) comprend en outre un module (17) de compression de données qui comprime le signal audio prononcé, **en ce que** le module (14) de formation de messages vocaux est de plus conçu pour insérer une caractérisation de compression qui caractérise le type de compression de données dans le message vocal à base audio et **en ce que** le terminal de communication (1) comprend en outre un module (18) de décompression de données qui décompresse en fonction de la caractérisation de la compression le signal audio prononcé et compressé, avant la reproduction acoustique.

12. Terminal de communication (1) selon l'une des revendications 8 à 11, **caractérisé en ce que** le module (14) de formation de messages vocaux est conçu pour déterminer une information d'adresse qui identifie le terminal de communication (1') récepteur par reconnaissance vocale basée sur un segment du signal audio numérisé.

13. Terminal de communication (1) selon l'une des revendications 7 à 12, **caractérisé en ce que** le module (14) de formation de messages vocaux est conçu pour recevoir de l'utilisateur un signal de commande en vue de l'envoi du message vocal par enfoncement d'une touche de commande, sélection dans un menu et prononciation d'un mot-clé, et pour lancer la transmission du message vocal à partir de ce signal de commande.

14. Produit de programme informatique comprenant des moyens de code de programme informatique qui commandent un ou plusieurs processeurs d'un terminal de communication (1, 1') de telle sorte que le terminal de communication (1, 1') exécute un procédé selon l'une des revendications 1 à 7.
